Europäisches Patentamt

European Patent Office

Office européen des brevets

(19)

(11) Veröffentlichungsnummer: **0 343 590 B1**

## (12) EUROPÄISCHE PATENTSCHRIFT

(45) Veröffentlichungstag der Patentschrift: **24.11.93**

(51) Int. Cl.⁵: **G01N 27/90**

(21) Anmeldenummer: **89109240.5**

(22) Anmeldetag: **23.05.89**

(54) **Wirbelstromsensor.**

(30) Priorität: **24.05.88 DE 3817574**

(43) Veröffentlichungstag der Anmeldung:
**29.11.89 Patentblatt 89/48**

(45) Bekanntmachung des Hinweises auf die
Patenterteilung:
**24.11.93 Patentblatt 93/47**

(84) Benannte Vertragsstaaten:
**AT BE CH DE ES FR GB GR IT LI LU NL SE**

(56) Entgegenhaltungen:
**WO-A-86/01895
WO-A-86/01895
DE-A- 1 811 079
DE-A- 3 140 848**

**PATENT ABSTRACTS OF JAPAN, Band 9, Nr.
163 (P-371)(1886), 9. Juli 1985; & JP-
A-60039552**

**DER ELEKTRONIKER, Heft 9, 1974, Seiten 7-13;
H.LUZ: "Elektronik in der zerstörungsfreien
Werkstoffprüfung"**

(73) Patentinhaber: **FRAUNHOFER-GESELLSCHAFT
ZUR FÖRDERUNG DER ANGEWANDTEN FOR-
SCHUNG E.V.
Leonrodstrasse 54
D-80636 München(DE)**

(72) Erfinder: **Egner, Harald
Heinrich-Ebner-Strasse 5
D-7000 Stuttgart 50(DE)**
Erfinder: **Rus, Robert
Herschelstrasse 16
D-7530 Pforzheim(DE)**
Erfinder: **Anthonio, Paul
Rozenstraat 146a
NL-1016NB Amsterdam(DE)**

**Beschreibung**

Die Erfindung bezieht sich auf einen Wirbelstromsensor mit einer Meßspule gemäß dem Oberbegriff des Patentanspruchs 1.

Wirbelstromsensoren, die beispielsweise in der zerstörungsfreien Werkstoffprüfung eingesetzt werden, sind beispielsweise aus dem Buch "Magnetische und magnetinduktive Werkstoffprüfung" von H. Heppner und H. Stroppe, VEB Deutscher Verlag für Grundstoffindustrie, Leipzig, 2. Auflage, 1969 oder aus dem in "Der Elektroniker" 1974, Heft 9, Seite 9 bis 13 erschienen Artikel "Elektronik in der zerstörungsfreien Werkstoffprüfung" von H. Luz bekannt.

Auf die dort angegebenen Anwendungsmöglichkeiten von Wirbelstromsensoren gemäß dem Oberbegriff des Patentanspruchs 1 beispielsweise in der Werkstoffprüfung wird ausdrücklich bezug genommen.

Die bekannten Wirbelstromsensoren weisen in der Regel eine Meßspule, in deren magnetischem Feld das zu erfassende Objekt angeordnet ist, sowie eine Referenzspule auf. Ferner ist in der Regel ein Signalgenerator, beispielsweise ein Sinusgenerator vorgesehen, dessen Ausgangssignal an die Spulen angelegt ist. Die an den beiden Spulen anstehenden Ausgangssignale werden mittels eines Subtrahierers voneinander subtrahiert. Das Ausgangssignal des Subtrahierers ist direkt an einen ersten Demodulator und über einen 90°-Phasenschieber an einen zweiten Demodulator angelegt. Dabei ist an die Demodulatoren als zusätzliches Signal das über einen Phasenschieber mit einstellbarem Phasenwinkel verschobene Ausgangssignal des Sinusgenerators angelegt.

Durch die zweifache Demodulation liegt das (verstärkte) Sensorsignal als Vektor in der "komplexen Impedanzebene" vor, wobei Betrag und Phase des Signals zur Auswertung herangezogen werden können.

Da weiterhin im Parallelzweig das Signal des Sinusgenerators durch den Phasenschieber mit einstellbarem Phasenwinkel um $0° \leq \tau \leq 360°$ phasenverschoben wird ($\tau$ beschreibt den Winkel, um den die Achsen der gebildeten Signalebene gegenüber den Achsen der Impedanzebene gedreht sind) können das Nutzsignal, z. B. das Signal einer Schweißnaht, und das Störsignal, das beispielsweise durch Abhebeeffekte einer oder beider Spulen erzeugt wird, in einem beliebigen Winkel $\alpha$ zueinander liegen. Das Störsignal ist dabei vom Betrag meist wesentlich größer als das Nutzsignal.

Üblicherweise wird das komplexe Signal auf einem Bildschirm angezeigt und visuell ausgewertet. Dabei wird zum Erkennen des interessierenden Signals (Nutzsignal) der Winkel $\tau$ am Phasenschieber so eingestellt, daß das Störsignal genau in Richtung der y-Achse zu liegen kommt. Der "Kanal x" wird dann z. B. mit einer "gefühlsmäßig" eingestellten Triggerschwelle zur Auswertung herangezogen.

Die bekannten Sensoren, die beispielsweise zur Werkstoffprüfung eingesetzt werden, haben damit eine Reihe von Nachteilen:
Zunächst einmal versteht es sich von selbst, daß eine visuelle Auswertung an einem Bildschirm nicht geeignet ist, wenn der Sensor in eine automatisierte Anlage zur Werkstoffprüfung integriert werden soll.

Darüberhinaus wird bei den bekannten Sensoren nur die Projektion des Nutzsignals auf die x-Achse ausgewertet. Damit wird der Störabstand zum Störsignal weiter verkleinert.

Ferner muß der Winkel $\tau$ präzise justiert werden. Minimale Änderungen in den Eigenschaften der Prüfobjekte - wie sie beispielsweise bei Chargenwechsel auftreten - können Fehl-Erkennungen zur Folge haben.

Der Erfindung liegt die Aufgabe zugrunde, einen Wirbelstromsensor, der beispielsweise zur Werkstoffprüfung einsetzbar ist, anzugeben, der bei vollem Störabstand eine automatisierte Auswertung der Signale erlaubt.

Eine erfindungsgemäße Lösung dieser Aufgabe ist mit ihren Weiterbildungen in den Patentansprüchen gekennzeichnet.

Die Erfindung wird nachstehend anhand von Ausführungsbeispielen unter Bezugnahme auf die Zeichnungen näher beschrieben, in der zeigen

Fig. 1
ein Blockschaltbild eines bekannten Wirbelstromsensors, von dem die Erfindung ausgeht,

Fig. 2
Beispiele für Sensorsignale in der "Impedanzebene"

Fig. 3
die Signalauswertung bei herkömmlichen Wirbelstromsensoren,

Fig. 4
die Signalauswertung bei einem erfindungsgemäßen Wirbelstromsensor, und

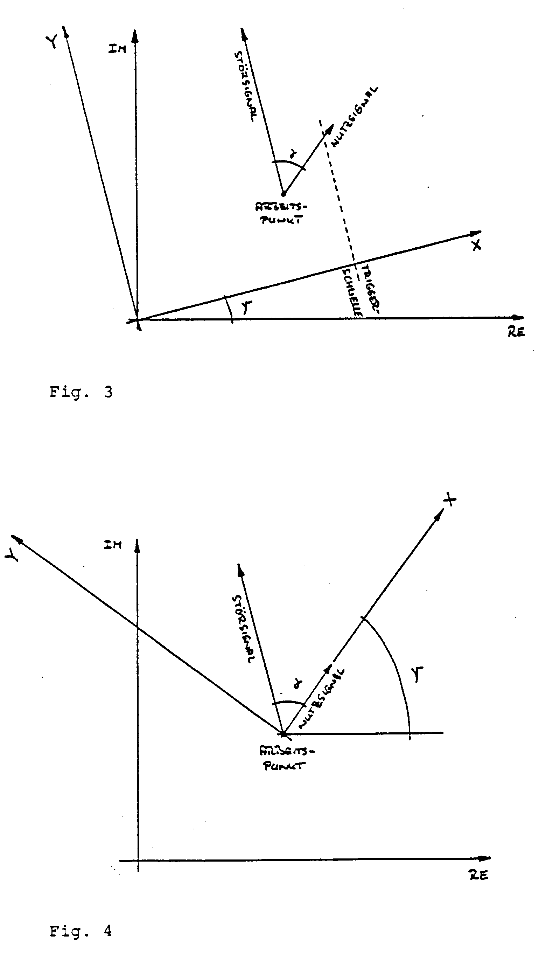

Fig. 5a und 5b
Blockschaltbilder von Ausführungsbeispielen, mit der die in Figur 4 gezeigte Signalauswertung realisiert werden kann, und

Fig. 6
die erfindungsgemäße Selbstkalibrierung.

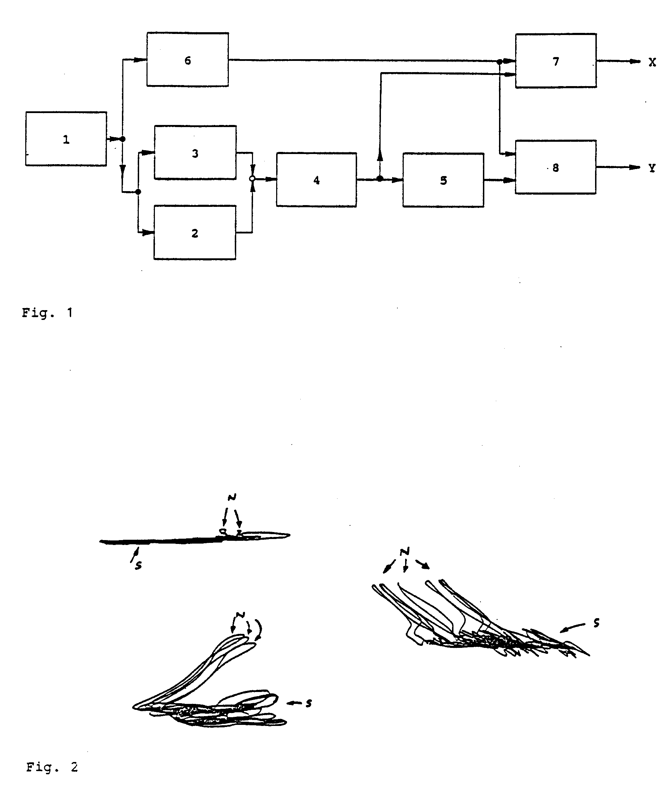

Figur 1 zeigt einen herkömmlichen Wirbelstromsensor, der als Signalgenerator einen Sinusgenerator 1 aufweist, dessen Ausgangssignal an einer Meßspule 2, einer Referenzspule 3 sowie an dem Eingangsanschluß eines Phasenschiebers 6 mit zwischen 0 und 360° einstellbarem Phasenwinkel anliegt.

Die Ausgangssignale der Meßspule 2 und der Referenzspule werden zunächst voneinander subtrahiert (Bezugszeichen 2-3) und mittels eines Verstärkers 4 verstärkt. Das Ausgangssignal des Verstärkers 4 liegt über einen Phasenschieber 5 mit einem festen Phasenwinkel von 90° an dem einen Eingangsanschluß eines Demodulators 8 an. Ferner liegt das Ausgangssignal des Verstärkers 4 direkt an dem einen Eingangsanschluß eines Demodulators 7 an. An den anderen Eingangsanschlüssen der Demodulatoren 7 und 8 liegt das Ausgangssignal des Phasenschiebers 6 mit einstellbarem Phasenwinkel an.

Die Ausgangssignale der Demodulatoren 7 und 8 werden in Übereinstimmung mit der Literatur als x-Kanal und y-Kanal bezeichnet.

Figur 2 zeigt Beispiele für Sensorsignale (x- und y-Kanal) in der sogenannten "komplexen Impedanzebene". Dabei ist mit N das Nutzsignal und S das Störsignal bezeichnet.

Wie man unmittelbar den gezeigten Beispielen entnehmen kann, sind "je nach Drehung" der einzelnen Signale die Größenrelationen zwischen den beiden Signalen unterschiedlich: Beispielsweise kann das Nutzsignal sehr viel kleiner als das Störsignal sein (linkes oberes Teilbild), in der gleichen Größenordnung (linkes unteres Teilbild) oder wesentlich kleiner als das Nutzsignal sein (rechtes Teilbild).

Bei den herkömmlichen Wirbelstromsensoren erfolgt die Signalauswertung in der in Figur 3 dargestellten Weise:

Wie bereits ausgeführt, liegt das Sensordifferenzsignal durch die zweifache Demodulation in den Demodulatoren 7 und 8 als Vektor in der komplexen Impedanzebene vor. Dabei ist $\tau$ der Winkel, um den die x- und y-Achse gegenüber den Achsen RE und IM der Impedanzebene durch die Phasenverschiebung um den Winkel $\tau$ durch den Phasenschieber 6 gedreht sind. Der Winkel $\tau$ wird am Phasenschieber 6 nun so eingestellt, daß das Störsignal genau in Richtung der y-Achse zu liegen kommt. Der Kanal X, d. h. das Ausgangssignal des Demodulators 7, wird dann über eine Triggerschwelle zur Auswertung herangezogen.

Die vorstehende Beschreibung zeigt nochmals deutlich den bereits einleitend ausgeführten Nachteil der bekannten Wirbelstromsensoren, nämlich die Verschlechterung des Nutz/Störsignal-Abstandes aufgrund der Tatsache, daß lediglich die Projektion des Nutzsignals auf die x-Achse zur Auswertung herangezogen wird.

Die Erfindung geht zur Verbesserung des Nutz-/Störsignal-Abstandes von dem Grundgedanken aus, nicht nur den Kanal X mit dem projizierten Nutzsignal, sondern beide Kanäle, d. h. die Ausgangssignale der Demodulatoren 7 und 8 zur Auswertung heranzuziehen.

Hierzu wird die xy-Ebene so gedreht, daß das Nutzsignal in Richtung der x-Achse zu liegen kommt. Der Nullpunkt des xy-Koordinatensystems liegt erfindungsgemäß nicht mehr im Nullpunkt der "komplexen Impedanzebene" sondern wird so verschoben, daß er in dem Arbeitspunkt des Sensors zu liegen kommt.

Hierzu wird das Störsignal mit einem Filter unterdrückt, der die Signale X und Y miteinander verknüpft:

$$c * Z = a * X - b * Y \text{ mit } \tan \alpha = a/b$$

Dieses Filter unterdrückt alle Signale, die im Winkel $\alpha$ zur x-Achse liegen. Der Faktor c beschreibt lediglich eine Anpassung der Amplitude des verknüpften Signals an die folgende Auswerteschaltung, beispielsweise an den Arbeitsbereich eines A/D-Wandlers.

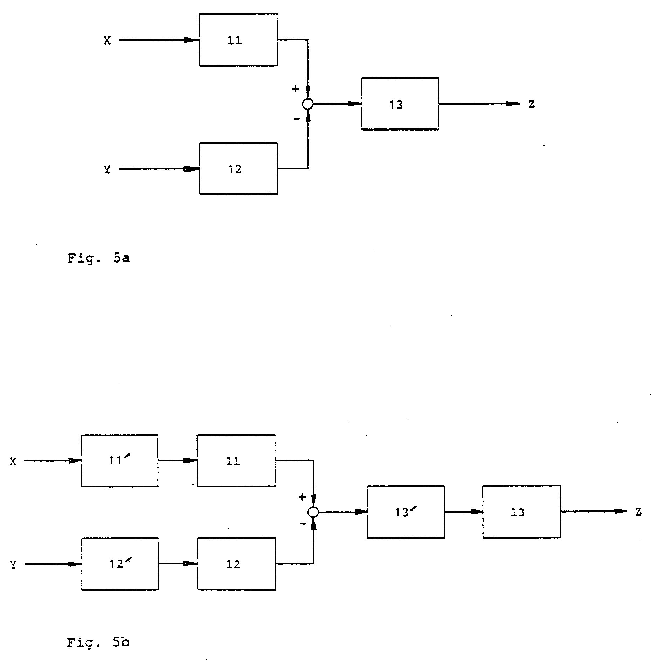

Figur 5a zeigt eine Prinzipschaltung einer erfindungsgemäßen Erweiterung der in Figur 1 gezeigten Grundschaltung eines Wirbelstromsensors.

Die an den Ausgangsanschlüssen der Demodulatoren 7 und 8 anstehenden Signale, d. h. das "x-Kanal- und das y-Kanal-Signal" werden zunächst in Verstärkern 11 und 12 verstärkt und dann in einem Subtrahierer 11-12 voneinander subtrahiert. Das Ausgangssignal des Subtrahierers 11-12 wird von einem Verstärker 13 verstärkt und ausgewertet (z-Kanal).

Durch Wahl der Verstärkungsfaktoren a und b der Verstärker 11 und 12 läßt sich der Winkel der vorstehend beschriebene Signalunterdrückung auf den Winkel $\alpha$ zwischen Nutz- und Störsignal einstellen.

Figur 5b zeigt ein erweitertes Blockschaltbild der erfindungsgemäßen Weiterbildung des in Figur 1 dargestellten Wirbelstromsensors. Bei dieser Weiterbildung sind den Verstärkern 11, 12 und 13 zusätzliche Signalverarbeitungsmodule 11', 12' und 13' vorgeschaltet, die beispielsweise eine Hochpassfunktion, eine Tiefpassfunktion eine Differenzier- oder Integrierfunktion haben können.

Durch die in den Figuren 5a und b dargestellten exemplarischen Weiterbildungen der bekannten Wirbelstromsensoren läßt sich eine automatisierte Auswertung der Wirbelstromsensor-Ausgangssignale mit hohem Nutz-/Störsignal-Abstand erreichen.

Dabei hat die erfindungsgemäße Auswertung insbesondere den überraschenden Vorteil, daß der Winkel $\alpha$ für ähnliche Werkstücke nahezu unabhängig von der Charge ist. Dies bedeutet, daß die Größe $\tan \alpha$, d. h. das Verhältnis der Verstärkungsfaktoren a/b der Verstärker 11 und 12 einmal vor Ablauf einer automatisierten Prüfung eingestellt werden kann und während der Prüfung auch bei einem Chargenwechsel nicht mehr verändert werden muß.

3

Bei der automatisierten Erkennung von axialen Merkmalen an rotationssymmetrischen Werkstükken z. B. von Schweißnähten an längs geschweißten Rohren mit elektromagnetischen Meßverfahren, d. h. mittels Wirbelstrom- bzw. Streuflußmessung, stellt sich das zusätzliche Problem, daß sich die elektromagnetischen Eigenschaften des Werkstoffes von Werkstück zu Werkstück unterscheiden. Eine einfache Triggerschwelle im z-Kanal in Figur 5a und b ist damit für die automatische Erkennung des Merkmals zu unsicher, da die Schwelle laufend an unterschiedliche Werkstücke, beispielsweise bei Chargen- und/oder Herstellerwechsel angepaßt werden muß.

Deshalb ist erfindungsgemäß bei der Orientierung von axialen Merkmalen eine Selbstkalibrierung vorgesehen, die nach der Digitalisierung des Sensorsignals in einer Digital-Funktionseinheit im Anschluß an den z-Ausgangsanschluß hard- und/oder softwaremäßig realisiert werden kann.

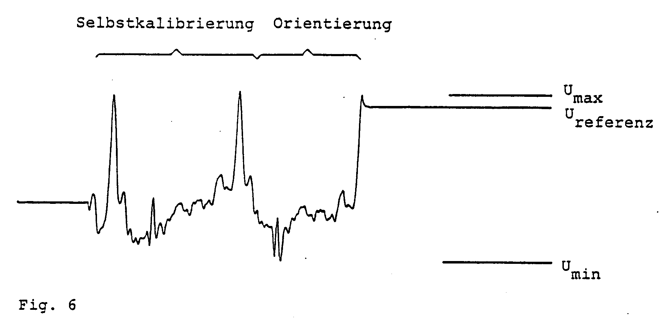

Diese orientierende Selbstkalibrierung wird im folgenden unter Bezugnahme auf Figur 6 näher beschrieben:

In der ersten Phase, die auch als Selbstkalibrierungsphase bezeichnet werden kann, wird das rotationssymmetrische Werkstück um etwa 400° gedreht und die in dieser Zeit auftretenden Spannungsmaxima und -minima gespeichert. Das zu erkennende axiale Merkmal wird während dieser Phase mindestens einmal überfahren. Das Spannungsmaximum repräsentiert das Signal des gesuchten Merkmals. Beide Spannungswerte werden über die Beziehung

$$U_{Referenz} = u_{max} - (u_{max} - u_{min}) * d$$

miteinander verknüpft.

In der Zweiten Phase (Orientierung) wird das rotationssymmetrische Werkstück weiter gedreht, bis das Signal die Referenzspannung $U_{Referenz}$ wieder erreicht. Damit ist das axiale Merkmal relativ zum Sensor orientiert.

Der Faktor d berücksichtigt dabei Meßunsicherheiten, die durch mechanische, thermische oder elektrische Ungenauigkeiten des Meßaufbaus verursacht werden. Bei einem Wert von d von 0,05 werden beispielsweise bei höchstens dreimaligem, direkt aufeinanderfolgenden Überfahren desselben Merkmals Streuungen der Merkmalsamplitude um 5% der Gesamtamplitude des Sensorsignals zugelassen.

Vorstehend ist die Erfindung exemplarisch ohne Beschränkung des allgemeinen Erfindungsgedankens und/oder des Anwendungsbereichs beschrieben worden. Dabei kann die im Anspruch 1 gekennzeichnete Erfindung insbesondere bei einer automatischen Erkennung von Wirbelstrom-Signalen mit einer Triggerschwelle Verwendung finden.

Die im Anspruch 6 angegebene erfindungsgemäße Ausgestaltung ermöglicht dabei vorteilhafter Weise die Orientierung von axialen Merkmalen an rotationssymmetrischen Werkstücken, z. B. von Schweißnähten an längs geschweißten Rohren und/oder Wandstärkenminima an Innensechskantrohren.

**Patentansprüche**

1. Wirbelstromsensor mit einer Meßspule, in deren magnetischem Feld das zu erfassende Objekt angeordnet ist, und einer Referenzspule sowie einem Sinusgenerator, dessen Ausgangssignal an die Spulen angelegt ist, deren Ausgangssignale mittels eines Subtrahierers voneinander subtrahiert werden, dessen Ausgangssignal an einen ersten Demodulator direkt und an einen zweiten Demodulator über einen 90°-Phasenschieber angelegt ist, wobei an den Demodulatoren als zusätzliches Signal das über einen Phasenschieber mit einstellbarem Phasenwinkel verschobene Ausgangssignal des Sinusgenerators angelegt ist, und der Phasenwinkel so gewählt ist, daß Störsignale in der so gebildeten Signalebene eine bestimmte Richtung haben,
dadurch **gekennzeichnet**, daß das Ausgangssignal des ersten Demodulators über einen Verstärker mit einstellbarem Verstärkungsfaktor (a) und das Ausgangssignal des zweiten Demodulators über einen Verstärker mit einstellbarem Verstärkungsfaktor (b) an einen weiteren Subtrahierer angelegt ist, dessen Ausgangssignal ($U_{trig}$) beispielsweise über eine Triggerschwelle als Maß für das zu erfassende Objekt herangezogen wird.

2. Sensor nach Anspruch 1,
dadurch **gekennzeichnet**, daß dem weiteren Subtrahierer ein weiterer Verstärker mit einstellbarem Verstärkungsfaktor (c) nachgeschaltet ist.

3. Sensor nach einem der Ansprüche 1 oder 2,
dadurch **gekennzeichnet**, daß vor den beiden Verstärkern mit einstellbarem Verstärkungsfaktor (a,b) und/oder dem weiteren Verstärker Signalformerstufen vorgesehen sind.

4. Sensor nach Anspruch 3,
dadurch **gekennzeichnet**, daß die Signalformerstufen eine Hochpaß-, Tiefpaß-, Differenzier- und/oder Integrierfunktion haben.

5. Anwendung des Sensors nach einem der Ansprüche 1 bis 4,
dadurch **gekennzeichnet**, daß zum Erkennen von axialen Merkmalen, wie z.B. Schweißnähten bei ansonsten rotationssymmetrischen Werkstücken zunächst das Werkstück um mehr als 360° gedreht wird, und daß zum Positionieren des Merkmals über der Meßspule das Werkstück anschließend so gedreht wird, daß das Ausgangssignal $U_{trig}$ des weiteren Subtrahierers den Wert

$$U_{max} - [U_{max} - U_{min}] * d$$

erreicht mit d typischerweise: 0,01...0,25.

6. Verfahren zum Betreiben eines Sensors nach Anspruch 1, dadurch gekennzeichnet, daß der einstellbare Phasenwinkel so gewählt wird, daß das Nutzsignal in Richtung einer Achse der Signalebene liegt.

7. Verfahren zum Betreiben eines Sensors nach Anspruch 1, dadurch gekennzeichnet, daß die Verstärkungsfaktoren a and b vor der Überprüfung einer Reihe von Objekten so gewählt werden, daß zwischen dem vorgegebenen Winkel $\alpha$ zwischen Nutz- und Störsignal und den Faktoren a und b gilt: $\tan \alpha = \frac{a}{b}$

**Claims**

1. Eddy current sensor with a measuring coil in whose magnetic field the object to be detected is arranged, and a reference coil as well as a sinus generator whose output signal is applied to the coils and the output signals of which are subtracted from each other by means of a subtractor and the output signal from this is directly applied to a first demodulator and via a 90° phase shifter to a second demodulator, in which applied to the demodulator as an additional signal is the output signal of the sine-wave generator displaced by a phase shifter with adjustable phase angle, and the phase angle is selected in such a way that interference signals in the signal plane thus formed have a given direction, **characterised** in that the output signal of the first demodulator via an amplifier with adjustable amplification factor (a) and the output signal of the second demodulator via an amplifier with adjustable amplification factor (b) is applied to a further subtractor whose output signal ($U_{trig}$) is used as the measure for the object to be detected, for example via a trigger threshold.

2. Sensor according to claim 1, **characterised** in that the further subtractor has a further amplifier with adjustable amplification factor (c) connected in series with it.

3. Sensor according to one of the claims 1 or 2, **characterised** in that signal former stages are provided before the two amplifiers with adjustable amplification factor (a, b) and/or the further amplifier.

4. Sensor according to claim 3, **characterised** in that the signal former stages have a high pass function, a low pass function, differentiating function and/or integrating function.

5. Use of the sensor according to one of the claims 1 to 4, **characterised** in that for recognising axial features such as for example welding seams in otherwise axially symmetrical workpieces, the workpiece is first of all rotated through at least 360° and that for positioning the feature above the measuring coil, the workpiece is then rotated in such a way that the output signal $U_{trig}$ of the further subtractor reaches the value

$$U_{max} - [U_{max} - U_{min}] * d$$

with d typically: 0,01...0,25.

6. Method for operating a sensor according to claim 1, **characterised** in that the adjustable phase angle is selected in such a way that the useful signal is located in the direction of an axis of the signal plane.

7. Method for operating a sensor according to claim 1, **characterised** in that prior to the testing of a series of objects the amplification factors a and b are selected in such a way that between given angle $\alpha$ between useful and interference signal and the factors a and b : $\tan \alpha = \frac{a}{b}$

**Revendications**

1. Capteur de courants de Foucault comportant :
   - une bobine de mesure dans le champ magnétique de laquelle est placé l'objet à examiner,
   - une bobine de référence,
   - un générateur de sinus dont le signal de sortie est appliqué aux bobines précédentes dont les signaux de sortie sont soustraits l'un de l'autre par un soustracteur,
   - deux démodulateurs recevant le signal de sortie du soustracteur, le premier directement et le second à travers un déphaseur de 90°,
   - un déphaseur à angle de phase réglable envoyant, après déphasage, le signal de sortie du générateur de sinus à chacun des deux démodulateurs à titre de signal complémentaire, l'angle de phase du déphaseur étant choisi de façon que les signaux parasites aient une orientation déterminée dans le champ du signal ainsi formé,

caractérisé en ce que le signal de sortie du premier démodulateur amplifié par un amplificateur à facteur d'amplification réglable (a), ainsi que le signal de sortie du second démodulateur amplifié par un amplificateur à facteur d'amplification variable (b) sont envoyés tous deux à un second soustracteur dont le signal de sortie ($U_{trig}$) est extrait, comme signal de mesure de l'objet en examen, par exemple au moyen d'un seuil de déclenchement.

2. Capteur selon la revendication 1, caractérisé en ce que le second soustracteur est branché en série à un autre amplificateur à facteur d'amplification réglable (c) disposé en aval.

3. Capteur selon une des revendications 1 ou 2, caractérisé en ce que des étages de mise en forme du signal sont montés en amont des deux amplificateurs à facteurs réglables (a, b) et/ou de l'autre amplificateur.

4. Capteur selon la revendication 3, caractérisé en ce que les étages de mise en forme du signal peuvent exercer des fonctions de filtrage passe-haut, filtrage passe-bas, différentiation et/ou intégration.

5. Mode d'utilisation du capteur selon l'une quelconque des revendications 1 à 4, caractérisé en ce que, pour reconnaître des particularités axiales telles que par exemple des cordons de soudure de pièces de révolution, la pièce est soumise à une rotation d'au moins 360°, la détermination de la position de la particularité par la bobine de mesure résultant d'une rotation amenant le signal de sortie $U_{trig}$ du second soustracteur à être égal à la valeur de l'expression

$$U_{max} - [U_{maxi} - U_{mini}] * d$$

pour des valeurs de d telles que 0,01...0,25.

6. Procédé d'exploitation d'un capteur selon la revendication 1, caractérisé en ce que l'angle de phase réglable est choisi de manière que le signal utile soit parallèle à un axe du plan du signal.

7. Procédé d'exploitation d'un capteur selon la revendication 1, caractérisé en ce que le choix des facteurs a et b, avant examen d'une série d'objets, est effectué de façon que l'angle $\alpha$ entre le signal utile et le signal parasite satisfasse la relation tg $\alpha$ = a/b.

Fig. 1

Fig. 2

Fig. 3

Fig. 4

Fig. 5a

Fig. 5b

Selbstkalibrierung   Orientierung

$U_{max}$

$U_{referenz}$

$U_{min}$

Fig. 6